## Europäisches Patentamt
## European Patent Office
## Office européen des brevets

(11) Publication number: **0 105 882**
**B1**

# EUROPEAN PATENT SPECIFICATION

(45) Date of publication of patent specification: **22.07.87**

(51) Int. Cl.⁴: **F 16 B 7/14**

(21) Application number: **83901121.0**

(22) Date of filing: **29.03.83**

(86) International application number:
**PCT/SE83/00117**

(87) International publication number:
**WO 83/03450 13.10.83 Gazette 83/24**

(54) **MEANS FOR TEMPORARILY LOCKING A RELATIVE POSITION BETWEEN TWO BODIES, TELESCOPICALLY DISPLACEABLE IN RELATION TO EACH OTHER.**

(30) Priority: **30.03.82 SE 8202020**

(43) Date of publication of application:
**25.04.84 Bulletin 84/17**

(45) Publication of the grant of the patent:
**22.07.87 Bulletin 87/30**

(84) Designated Contracting States:
**BE DE FR GB NL**

(56) References cited:
**FR-A-1 150 826**
**FR-A-1 279 647**
**FR-A-2 163 986**

**Handbook of Fastening and Joining of Metal Parts, 1st Edition, 1956, page 534, Mc.Graw-Hill**

(73) Proprietor: **APPLIED POWER INC.**
**P.O.Box 325**
**Milwaukee Wisconsin 53201 (US)**

(72) Inventor: **GIACOMINI, Jean Francois**
**Ugglestigen 7**
**S-703 48 Örebro (SE)**

(74) Representative: **Franke, Karl Wilhelm, Dr.**
**Steinsdorfstrasse 10**
**D-8000 München 22 (DE)**

Courier Press, Leamington Spa, England.

Description

The present invention relates to means for temporarily locking two elongated bodies which may be telescopically displaced relative to each other introducing one end of the one body into one end of the other body against movement relative to each other. Though the task of effectively locking two bodies and particularly two tubular or cylindrical bodies within each other may be encountered in several fields, the present invention is specifically dealing with the special problems arising in connection with the repair of damaged car bodies as indicated in detail below.

A structure allowing to lock a first cylindrical shaft within a hollow end of a second cylindrical shaft is disclosed in FR—A—2 163 986. The said structure includes a sleeve having an internal threading designed for cooperation with an external threading provided around the outer periphery of the hollow end of the second shaft and includes a ring wedge-shaped in section and having an external inclined surface abutting against an internal inclined surface provided around the end portion of the second shaft, an external annular groove snappingly receiving an annular shoulder provided around the outer end of said sleeve and an internal cylindrical surface for sealingly engaging the periphery of the first shaft around its end portion introduced into the hollow end of the second shaft. For obtaining an effective sealing between the two shafts said wedge-shaped ring is completely encircling the periphery of the first shaft and is made of a resilient material which upon being compressed between the facing periphery portions of the two shafts by axial force exerted upon it by the annular flange of the said sleeve when screwing it along the second shaft provides a sufficient amount of sealing pressure between the two shafts. For taking up longitudinal forces pressing the two shafts towards each other the end surface of the first shaft is made to abut against the bottom of the hollow space inside the second shaft. To ensure the desired locking action between the two shafts the material of the ring is selected to have a sufficiently high coefficient of friction causing correspondingly high frictional forces between the several surfaces in contact with each other.

Another structure, known from FR—A— 1 150 826, for locking two tubes of different diameters within each other includes a split ring having a conical outer surface, a cylindrical inner surface for partly engaging the periphery of the smaller diameter tube and one flat end surface for abutment against the end surface of the larger diameter tube and includes a sleeve having an inner diameter larger than the outer diameter of the larger diameter tube and having one inner end portion provided with a conical surface corresponding to the conical outer surface of said split ring and with an inner threading designed for cooperation with an outer threading provided around a periphery end portion of the larger diameter tube to create linear movement of the said sleeve along the common axes of the two tubes. The said ring is made of a resilient material, and in the course of said movement of said sleeve along the larger diameter tube the said ring has its end surface pressed against the end surface of the larger diameter tube and has its inner cylindrical surface pressed against the outer periphery of the smaller diameter tube narrowing its axial slit. Due to the decrease in its peripheral length thus obtained the split ring closely fits around a greater part of the periphery of the smaller diameter tube, and due to a high frictional coefficient of its material locks the two tubes inside each other.

A third structure, disclosed in FR—A—1 279 647, for locking a cylindrical tube or rod within another tube includes a ring having a conical outer surface coaxially corresponding to a conical inner surface provided on an end portion of said other tube and having an eccentrically disposed bore for receiving the said cylindrical tube or rod and includes a sleeve having an inner threading designed for cooperation with an outer threading provided on said end portion of said other tube and having an inner bottom designed for abutment against a facing end surface of said ring to press the said conical surfaces on said ring and on said end portion of said other tube against each other to cause frictional engagement between a part of the surface of said eccentrically disposed bore of said ring and the facing part of the outer periphery of said tube or rod for locking it inside the said other tube.

As mentioned above, the present invention is intended for use in repairing damaged car bodies. The damages most noticeable are those resulting from collisions. When repairing a vehicle damaged in a collision a hydraulic cylinder is used, its piston being extended as required by means of rods which may be connected to each other. With the aid of the hydraulic cylinder and said rods, it is possible to align damaged parts by increasing the distance between the hydraulic cylinder and its free extended piston end. In certain cases it is even possible to allow the piston its full stroke length and reshape the damaged part by gradually reducing the stroke length. In the first case an outwardly directed force is achieved, and in the second case an inwardly directed force is obtained. A heavy drawback with the known hydraulic pistons and their extendable rods, however, is that the effective lengths of the extended pistons cannot be altered continuously but only stepwise depending on the number of rod sections added or removed.

The object of the present invention is to provide means permitting to increase or decrease the effective length of the operating piston rod in a continuous manner without any steps while assuring a great strength of the locking obtained between cooperating rod sections even against high outwardly or inwardly directed axial forces.

The said object according to the present invention is obtained by the means defined in the appended claims 1 or 2.

The means according to the present invention allow locking of two rods or tubes at any place along of their lengths with high reliability and strength as required considering the high forces used in repairing damaged car bodies. The locking according to the present invention is achieved by wedge action. For the said purpose the inner body is provided with a ring surrounding it, said ring having an axial slit so that its circumference, including the slit, can be changed. The ring has an inner surface in contact with, or almost in contact with the outer surface of the inner body. The said inner surface may be such that it has a friction layer or a surface increasing the friction upon contact. The outer surface of the ring has a generatrix forming an angle with the longitudinal axis of the inner body. The said outer surface is suitably purely conical in shape. The outer body is provided at its end with an inner surface of the same type as the surrounding ring. The two surfaces can cooperate with each other. The outer body is also provided with an external thread cooperating with an internal thread on one end of a sleeve surrounding the two bodies. The other end of the sleeve is provided with a device to displace the ring towards said outer body. When the sleeve is turned so that the outer surface of the ring and the inner surface of the outer body come into contact with each other, locking of the two bodies in the selected relative position is obtained upon contact. If the two bodies are subjected to forces acting them against each other, the said locking is further increased. In the case of purely conical surfaces the point of the cone will be directed towards said outer body. If, however, the two bodies are subjected to forces tending to separate them, the point of the cone must be directed towards the inner body, whereupon the inner surface cooperating with the outer surface of the surrounding ring is arranged in said sleeve.

The present invention will now be described more fully with reference to the accompanying drawings in which

Fig. 1 shows an embodiment of the present invention intended to be used in connection with exerting pressure forces and

Fig. 2 shows an embodiment of the present invention intended to be used in connection with exerting pulling forces.

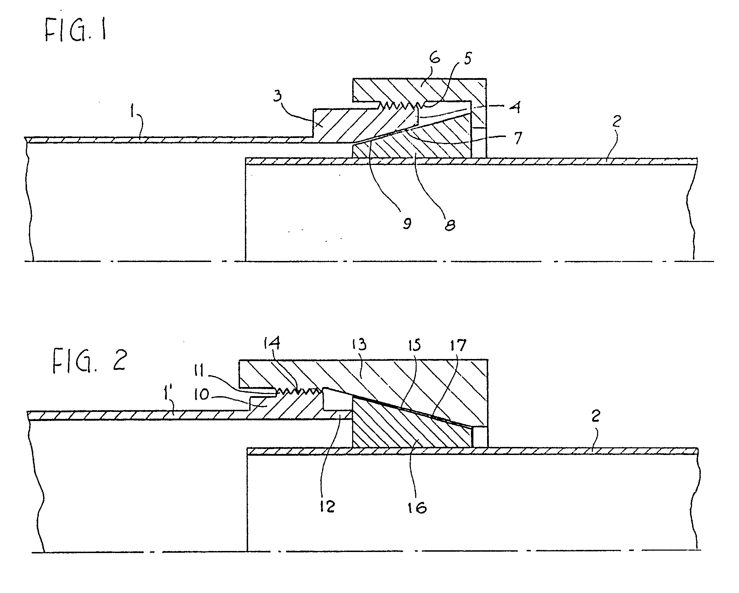

Fig. 1 shows two tubular bodies 1 and 2, displaceable one inside the other. One of them, the body 2 is designed to be attached to a hydraulic piston, and the free end of the other body 1 is designed to tackle the bodywork of a damaged vehicle. The body 1 may also telescopically cooperate with another tubular body. At its right-hand end 3 the body 1 is provided with increased wall thickness. An external threading 4 is provided in the thicker part of the tubular wall of the body 1 for cooperation with an internal 5 in a sleeve 6. The thickened end 3 of the body 1 has a conical inner surface 7, the cone point directing to the left. Opposite to said conical surface 7 an external conical surface 9 is provided on a ring 8 surrounding the body 2. The conicity of the external surface 9 is equal or substantially equal to the conicity of the surface 7. The ring 8 has a cylindrical inner surface in contact or substantially in contact with the outer surface of the body 2. The cylindrical surface of the ring 8 may be smooth or rough. The roughness can be effected by mechanical action on the surface or by means of a friction layer. The sleeve 6 is provided at its righthand end with an inwardly directed surrounding flange which, when moved to the left, displaces the ring 8 to the left. The ring 8 has an axial slit by means of which the circumference of the ring 8 can be increased or decreased, the circumference including the width of the slit. To facilitate changes in the circumference, the ring 8 is provided with one or more places with reduced thickness, which may comprise a number of longitudinal recesses. It should be evident that the two bodies 1 and 2 may have different crosssections. It should also be evident that the body 2 may consist of a solid rod.

The means shown in Fig. 1 functions as follows: The two bodies 1 and 2 have been given the desired length in relation to each other. The slit ring 8 is now pushed towards the righthand end of the body 1. The sleeve 6 is then screwed on to the end of the body 1. This is done manually until the surfaces 7 and 9 are satisfactorily in contact with each other and the surface of the ring 8 is in contact with the outer surface of the body 2, which can be achieved solely manually. When the two surfaces 7 and 9 are in contact with each other, the position of the two bodies 1 and 2 relative to each other is locked. If the two bodies 1 and 2 are pushed towards each other, the locking achieved manually will be maintained and further increased due to wedge action. The righthand end of the body 2 is intended to be attached to one end of a firmly anchored hydraulic piston. The lefthand end of the body 1 is intended to be applied to a bodywork of a damaged vehicle. It should be obvious that more than two bodies like the bodies 1 and 2 movable inside each other may be arranged between the hydraulic piston and the bodywork, locking means according to the present invention being disposed therebetween.

If a hydraulic piston with its extension parts is to be used to draw a portion of the bodywork closer to said hydraulic cylinder the conicities of both conical surfaces must be turned so that the cone points are directed to the right. An example for means of that type is shown in Fig. 2. Fig. 2 shows a thickened end 10 of a body 1' with an outer threading 11 and a push-on part 12. A ring 16 identical to the ring 8 of Fig. 1 has a conical surface 17 facing to the right. It is therefore necessary to arrange a corresponding inner conical surface 15 on the inside of a sleeve 13 having an inner threading 14 for cooperation with the threading 11 on the thickened end 10 of the body 1'.

The means shown in Fig. 2 functions as follows: When the bodies 1' and 2 assume the desired position relative to each other, the ring 16 is pushed into contact with the push-on part 12. The sleeve 13 is then screwed onto the body 1' so that

the two conical surfaces 15 and 17 come into contact with each other and so that the inner surface of the ring 16 is in good contact with the outer surface of the body 2. The two bodies 1' and 2 are then locked together. Here, too, this is achieved only by hand. If the two bodies 1' and 2 are then subjected to forces tending to separate them, the locking effect will be strengthened further due to wedge action.

The present invention is the result of endeavours to achieve a simpler means for straightening damaged bodywork of vehicles. The simplicity obtained lies in the extension of the piston rod of the hydraulic cylinder being continuous and not intermittent.

## Claims

1. Means for temporarily locking a first elongated body (1) having a first hollow end (3) provided with an external threading (4) and an interior end surface (7) extending outwardly under a first angle of inclination from the longitudinal axis of said first elongated body and a second elongated body (2) having a second end designed for being coaxially introduced into said first hollow end of said first elongated body for telescopic displacement therein against movement relative to each other, comprising a deformable wedge ring (8) surrounding said second elongated body when unstressed with an inner diameter slightly greater than the outer diameter of said second elongated body and with an interior surface made and/or designed for providing an elevated coefficient of friction and having an external inclined surface (9) extending from the longitudinal axis of said first and second elongated bodies under an angle of inclination corresponding to that of said interior end surface of said first hollow end of said first elongated body and a sleeve (6) provided on one end with an internal threading (5) designed for cooperation with said external threading on said first hollow end of said first elongated body and on the other end with a collar designed for engaging said wedge ring for moving it towards said first elongated body simultaneously pressing it around said second elongated body for effecting locking action between said first and second elongated bodies, characterised in that said first hollow end (3) of said first elongated body (1) is provided with increased wall thickness, that said sleeve (6) and said wedge ring (8) are designed for simple abutment of said collar on said other end of said sleeve against the wider end surface of said wedge ring and that said wedge ring (8) is provided with an axial slit and with a plurality of places of reduced wall thickness extending longitudinally throughout its length for enabling and facilitating reduction of the length of its circumference.

2. Means for temporarily locking a first elongated body (1') having a first hollow end (10) provided with an external threading (11) and an abutment end portion (12) and a second elongated body (2) having a second end designed for being coaxially introduced into said first hollow end of said first elongated body for telescopic displacement therein against movement relative to each other, comprising a deformable wedge ring (16) surrounding said second elongated body when unstressed with an inner diameter slightly greater than the outer diameter of said second elongated body and with an interior surface made and/or designed for providing an elevated coefficient of friction and having an external inclined surface (17) extending from the longitudinal axis of said first and second elongated bodies under an angle of inclination and a wider abutment end surface dsigned for engagement with said abutment end portion on said first hollow end of said first elongate body and a sleeve (13) provided on one end with an internal threading (14) designed for cooperation with said external threading on said first hollow end of said first elongated body and on the other end with an inclined internal surface (15) extending from the longitudinal axis of said first and second elongated bodies under an angle of inclination corresponding to that of said external inclined surface of said wedge ring for through mutual engagement of the said inclined surfaces pressing said wedge ring around said second elongated body with narrowing an axial slit provided along the circumference of said wedge ring for effecting locking action between said first and second elongated bodies, characterised in that said first hollow end (10) of said first elongated body (1') has a portion of increased wall thickness including said external threading (11) and that said wedge ring (16) parallel to its axial slit is provided with a plurality of places of reduced wall thickness extending longitudinally throughout its length for facilitating reduction of the length of its circumference.

## Patentansprüche

1. Mittel zum zeitweiligen Festlegen eines ersten langgestreckten Körpers (1), der ein erstes hohles Ende (3) aufweist, das mit einem Außengewinde (4) und einer inneren Endfläche (7) versehen ist, die sich unter einem ersten Neigungswinkel gegen die Längsachse besagten ersten langgestreckten Körpers nach außen erstreckt, und eines zweiten langgestreckten Körpers (2), der ein zweites Ende aufweist, das für eine koaxiale Einführung in besagtes erstes hohles Ende besagten ersten langgestreckten Körpers zu teleskopischer Verschiebung darin ausgelegt ist, gegen Bewegung relativ zueinander mit einem verformbaren Keilring (8), der besagten zweiten langgestreckten Körper mit einem unbelastet den Außendurchmesser besagten zweiten langgestreckten Körpers geringfügig übersteigenden Innendurchmesser und mit einer Innenfläche umgibt, die auf die Schaffung eines erhöhten Reibungskoeffizienten hin hergestellt und/oder ausgelegt ist, und eine geneigte Außenfläche (9) aufweist, die gegen die Längsachse besagter erster und zweiter langgestreckter Körper unter einem Neigungswinkel verläuft, der dem besagter innerer Endfläche besagten ersten hohlen Endes besagten ersten langgestreckten Körpers entspricht, und einer Muffe (6), die an einem Ende ein auf ein Zusammenwirken mit besagtem Außengewinde an besagtem erstem hohlem Ende besagten ersten langgestreckten Körpers ausgelegtes Innengewinde (5) und am anderen Ende einen Kragen aufweist, die auf ein Erfassen besagten Keilrings zu dessen Bewegung in Richtung auf besagten ersten langgestreckten Körper zu unter gleichzeitigem Zusammendrücken rund um besagten zweiten langgestreckten Körper zwecks Erzielung einer Blockierwirkung zwischen besagten ersten und zweiten langgestreckten Körpern ausgelegt ist, dadurch gekennzeichnet, daß besagtes erstes hohles Ende (3) besagten ersten langgestreckten Körpers (1) mit vergrößerter Wandstärke ausgebildet ist, daß besagte Muffe (6) und besagter Keilring (8) auf einfachen Anschlag besagten Kragens an besagtem anderem Ende besagter Muffe gegen die weitere Stirnfläche besagten Keilrings ausgelegt sind und daß besagter Keilring (8) mit einem axialen Schlitz und mit einer Mehrzahl von Stellen verringerter Wandstärke ausgebildet ist, die sich in Längsrichtung über seine gesamte Länge erstrecken, um eine Verminderung seiner Umfangslänge zu ermöglichen und zu erleichtern.

2. Mittel zum zeitweiligen Festlegen eines ersten langgestreckten Körpers (1'), der ein erstes hohles Ende (10) aufweist, das mit einem Außengewinde (11) und mit einem endseitigen Anschlagabschnitt (12) versehen ist, und eines zweiten langgestreckten Körpers (2), der ein zweites Ende aufweist, das für eine koaxiale Einführung in besagtes erstes hohles Ende besagten ersten langgestreckten Körpers zu teleskopischer Verschiebung darin ausgelegt ist, gegen Bewegung relativ zueinander mit einem verformbaren Keilring (16), der besagten zweiten langgestreckten Körper mit einem unbelastet den Außendurchmesser besagten zweiten langgestreckten Körpers geringfügig übersteigenden Innendurchmesser und mit einer Innenfläche umgibt, die auf die Schaffung eines erhöhten Reibungskoeffizienten hin hergestellt und/oder ausgelegt ist, und eine gegen die Längsachse besagter erster und zweiter langgestreckter Körper unter einem ersten Neigungswinkel geneigt verlaufende Außenfläche (17) und eine weitere Anschlagstirnfläche aufweist, die für eine Anlage an besagtem endseitigen Anschlagabschnitt an besagtem erstem hohlem Ende besagten ersten langgestreckten Körpers ausgelegt ist, und einer Muffe (13), die an einem Ende ein auf ein Zusammenwirken mit besagtem Außengewinde an besagtem erstem hohlem Ende besagten ersten langgestreckten Körpers ausgelegtes Innengewinde (14) und am anderen Ende eine geneigte Innenfläche (15) aufweist, die gegen die Längsachse besagter erster und zweiter langgestreckter Körper unter einem Neigungswinkel verläuft, der dem besagter geneigter Außenfläche besagten Keilrings entspricht, um durch gegenseitige Anlage besagter geneigter Flächen aneinander besagten Keilring unter Verengung eines entlang des Umfangs besagten Keilrings vorgesehenen axialen Schlitzes zwecks Erzielung einer Blockierwirkung zwischen besagten ersten und zweiten langgestreckten Körpern rund um besagten zweiten langgestreckten Körper zu pressen, dadurch gekennzeichnet, daß besagtes erstes hohles Ende (10) besagten ersten langgestreckten Körpers (1') einen besagtes Außengewinde (11) enthaltenden Abschnitt mit vergrößerter Wandstärke aufweist und daß besagter Keilring (16) parallel zu seinem axialen Schlitz mit einer Mehrzahl von Stellen verringerter Wandstärke versehen ist, die sich in Längsrichtung über seine gesamte Länge erstrecken, um eine Verminderung seiner Umfangslänge zu erleichtern.

**Revendications**

1. Moyens pour bloquer temporairement un premier corps long (1) ayant un premier bout creux (3) pourvu d'un filet extérieur (4) et d'une surface intérieure terminale (7) s'étendant vers l'extérieur sous un premier angle d'inclinaison vers l'axe longitudinal du dit premier corps long et un deuxième corps long (2) ayant un deuxième bout construit pour être introduit coaxialement dans le dit premier bout creux du dit premier corps long pour y être displacé téléscopiquement contre des mouvements relatifs l'un par rapport à l'autre, ayant une bague conique déformable (8) entourant le dit deuxième corps long d'un diamètre intérieur qui, n'étant pas comprimé, est légèrement plus grand que le diamètre extérieur du dit deuxième corps long et d'une surface intérieure qui est fabriquée et/ou construite pour créer un coefficient de friction élevé et ayant une surface extérieure inclinée (9) s'étendant vers l'axe longitudinal des dits premier et deuxième corps longs sous un angle d'inclinaison correspondant à celui de la dite surface intérieure terminale du dit premier bout creux du dit premier corps long et un manchon (6) pourvu, à un bout, d'un filet femelle (5) construit à une coopération avec le dit filet extérieur du dit premier bout creux du dit premier corps long et, à l'autre bout, d'un collet construit pour buter contre la dite bague conique pour la displacer vers le dit premier corps long en la comprimant simultanément autour du dit deuxième corps long pour obtenir une action de blocage entre les dits premier et deuxième corps longs, caractérisé en ce que le dit premier bout creux (3) du dit premier corps long (1) est d'une épaisseur augmentée, que le dit manchon (6) et la dite bague conique (8) sont construits d'une manière que le dit collet du dit autre bout bute simplement contre la surface terminale plus étendue de la dite bague conique et que la dite bague conique (8) a une fente axiale et une pluralité des places d'épaisseur réduite s'étendant longitudinalement sur toute sa longeur pour rendre possible et plus facile la réduction de sa circonférence.

2. Moyens pour bloquer temporairement un premier corps long (1') ayant un premier bout creux (10) pourvu d'un filet extérieur (11) et d'une butée terminale (12) et un deuxième corps long (2) ayant un deuxième bout construit pour être introduit coaxialement dans le dit premier bout creux du dit premier corps long pour y être displacé téléscopiquement contre des mouvements relatifs l'un par rapport à l'autre, ayant une bague conique déformable (16) entourant le dit deuxième corps long d'un diamètre intérieur qui, n'étant pas comprimé, est légèrement plus grand que le diamètre extérieur du dit deuxième corps long et d'une surface intérieure qui est fabriquée et/ou construite pour créer un coefficient de friction élevé et ayant une surface extérieure inclinée (17) s'étendant vers l'axe longitudinal des dits premier et deuxième corps longs sous un premier angle d'inclinaison et une surface d'arrêt terminale plus étendue construite pour buter contre la dite butée terminale du dit premier bout creux du dit premier corps long et un manchon (13) pourvu, à un bout, d'un filet femelle (14) construit à une coopération avec let dit filet extérieur du dit premier bout creux du dit premier corps long et, à l'autre bout, d'une surface intérieure inclinée (15) s'étendant vers l'axe longitudinal des dits premier et deuxième corps longs sous un angle d'inclinaison correspondant à celui de la dite surface extérieure inclinée de la dite bague conique pour comprimer la dite bague conique autour le dit deuxième corps long par une rencontre mutuelle des dites surfaces inclinées en resserrant une fente axiale pourvue sur la circonférence de la dite bague conique pour obtenir une action de blocage entre les dits premier et deuxième corps longs, caractérisé en ce que le dit premier bout creux (10) du dit premier corps long (1') a un tronçon d'épaisseur augmentée contenant le filet extérieur (11) et que la dite bague conique (16) parallèle à sa fente axiale est pourvue d'une pluralité des places d'épaisseur reduite s'étendant longitudinalement sur toute sa longeur pour faciliter la réduction de sa circonférence.

FIG.1

FIG. 2